# EUROPÄISCHE PATENTSCHRIFT

(11) **EP 2 276 639 B1**
(45) Veröffentlichungstag und Bekanntmachung des Hinweises auf die Patenterteilung: **15.05.2013**
(21) Anmeldenummer: 09745483.9
(22) Anmeldetag: 14.03.2009
(51) Int. Cl.: B60B 3/10, B60B 3/16, B60B 3/00

(54) **STAHLSTRUKTURRAD**
STEEL STRUCTURE WHEEL
ROUE À STRUCTURE EN ACIER

(30) Priorität: 13.05.2008 DE 102008023404
(43) Veröffentlichungstag der Anmeldung: 26.01.2011
(73) Patentinhaber: Volkswagen Aktiengesellschaft, 38440 Wolfsburg (DE)
(72) Erfinder: SCHRÖDER, Dennis, 38477 Jembke (DE); FRITZ, Michael, 38440 Wolfsburg (DE)
(86) Internationale Anmeldenummer: PCT/EP2009/001881
(87) Internationale Veröffentlichungsnummer: WO 2009/138149

(56) Entgegenhaltungen:
- WO-A1-03/043836
- DE-A1-102006 009 884
- US-A- 2 407 749
- US-B1- 6 517 165

## Beschreibung

Die Erfindung bezieht sich auf ein Stahlstrukturrad, umfassend eine Radscheibe mit einem Mittelabschnitt sowie von diesem radial abstehenden Speichen, welche in Umfangsrichtung durch Belüftungsöffnungen voneinander getrennt sind, einem Lochkreis aus mehreren Befestigungsöffnungen an dem Mittelabschnitt, sowie um die Befestigungsöffnungen angeordneten Anlageflächen zum Verspannen des Stahlstrukturrads gegen eine fahrzeugseitige Gegenfläche, wobei jede Anlagefläche in zumindest vier Segmente unterteilt ist, und zumindest zwei Segmente zumindest abschnittsweise unterschiedlich weit von der Radscheibe abstehen.

In der DE 10 2006 016 953 A1 und der gattungsgemäßen DE 10 2006 009 884 A1 sind Fahrzeugräder beschrieben, welche segmentierte Anlageflächen zur Abstützung an einer fahrzeugseitigen Gegenfläche wie einer Radnabe, einer Bremstrommel oder einer Bremsscheibe aufweisen, wobei die Segmente um die Befestigungsöffnungen herum angeordnet sind. Ferner ist in der DE 10 2006 009 884 A1 offenbart, dass von den an der Innenseite der Radscheibe ausgebildeten Segmenten der Anlageflächen die radial am weitesten innen liegenden Flächen axial am weitesten vorstehen.

Aus der WO 03/043836 A1 ist ein Stahlrad mit radial abstehenden Speichen bekannt, bei dem die um die Befestigungsöffnungen herum angeordneten Anlageflächen aus beispielsweise vier Segmenten zusammengesetzt sind. Die übertragenen Kräfte werden gleichzeitig durch die beiden radial äußeren und die beiden radial inneren Flächensegmente aufgenommen:

Die US 2 407 749 A1 zeigt ein Schreibenrad mit Befestigungslöchem zur Verschraubung an einer Nabe. Ringförmig um die Befestigungslöcher herum sind Vorsprünge ausgebildet, die abwechselnd in die eine oder andere axiale Richtung weisen.

Ein Fahrzeugrad mit zwei um die Befestigungslöcher herum ausgebildeten sichelförmigen Anlagenflächen ist aus der US 6 517 165 B1 bekannt.

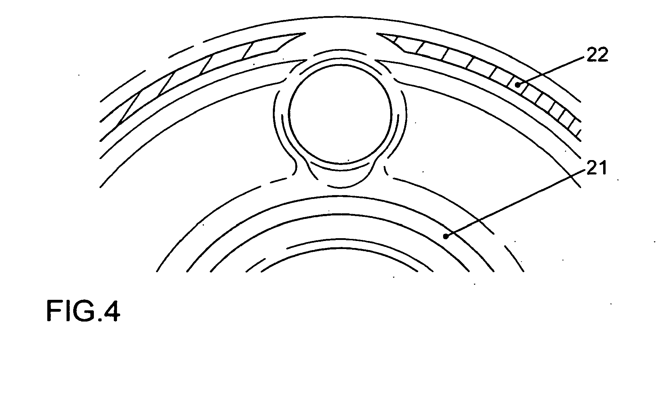

Im Unterschied hierzu sind bei herkömmlichen Stahlrädern zwei ringförmige Anlageflächen konzentrisch um eine zentrale Mittenöffnung des Rads angeordnet. Solche Stahlräder werden unter anderem in der EP 0 807 025 B1, der DE 198 36 239 C2, der DE 101 22 202 C1, der DE 102 18 339 A1 und der US 2003/0160502 offenbart. Die ringförmigen Anlageflächen sind dabei derart ausgebildet, dass im unverspannten Zustand des Rades die radial weiter innen liegende Anlagefläche 21 gegenüber der radial weiter außen liegenden Anlagefläche 22 etwas zurücktritt (vgl. Fig. 4). Durch diesen Versatz, der üblicherweise in der Größenordnung von 0,1 bis 0;2 mm liegt, wird bei der Montage zunächst eine definierte Anlage über die radial außenliegende Anlagefläche erzielt. Die radial innenliegende Anlagefläche gelangt hingegen erst beim Spannen der Radschrauben bzw. Radmuttern in Anlage gegen die fahrzeugseitige Gegenfläche, wobei der entsprechende Abschnitt der Radscheibe etwas einfedert.

Üblicherweise werden derartige Stahlräder aus Platinen mit einer Materialdicke von 4,0 mm bis 4,2 mm +/- 0,2 mm gefertigt. Im Bereich der Anlagefläche weist ein Standard-Rad nach der Umformung eine Blechdicke von ca. 3,5 mm auf. Hierdurch ist die Radscheibe im Bereich der Befestigungsöffnungen ausreichend elastisch, um das vorstehend erläuterte, gewünschte Einfedern beim Spannen der Radschrauben bzw. Radmuttern bereitzustellen.

Mit zunehmender Materialdicke wird die Radscheibe jedoch steifer, woraus Probleme für den Schraubenfestsitz entstehen können. Eine der wesentlichen Entwicklungsprüfungen in der Stahlradentwicklung ist die Schraubenfestsitzprüfung am Fahrzeug. Hierbei wird ein vollbeladenes Fahrzeug auf einem vorgegebenen Handlingskurs auf ebener Fläche mit maximaler Seitenkraft gesteuert. Das Anziehmoment der Radschrauben darf nach Absolvierung der Prüfung auf minimal 80 Prozent des Nennanziehmoments abfallen, wobei ein leichtes Verdrehen der Schrauben um wenige Grad zulässig ist. Ist die verspannte Struktur sehr steif, besteht die Gefahr, dass das Anziehmoment unter die genannte Schwelle abfällt.

Der Erfindung liegt die Aufgabe zu Grunde, hier Abhilfe zu schaffen. Insbesondere zielt die Erfindung darauf ab, den Schraubenfestsitz bei einer verhältnismäßig steifen Radscheibe zu verbessern.

Diese Aufgabe wird durch ein Stahlstrukturrad gemäß Patentanspruch 1 gelöst. Das erfindungsgemäße Stahlstrukturrad umfasst eine Radscheibe mit einem Mittelabschnitt sowie von diesem radial abstehenden Speichen, welche in Umfangsrichtung durch Belüftungsöffnungen voneinander getrennt sind, einem Lochkreis aus mehreren Befestigungsöffnungen an dem Mittelabschnitt, sowie um die Befestigungsöffnungen angeordneten Anlageflächen zum Verspannen des Stahlstrukturrads gegen eine fahrzeugseitige Gegenfläche. Jede der Anlageflächen ist in zumindest vier Segmente unterteilt und zumindest zwei Segmente stehen zumindest abschnittsweise unterschiedlich weit von der Radscheibe ab. Das erfindungsgemäße Rad zeichnet sich dadurch aus, dass , dass jede der Anlageflächen durch einander im Bereich der Befestigungsöffnung kreuzende Nuten in die zumindest vier Segmente unterteilt ist, und dass die radial weiter außen liegenden Segmente der Anlageflächen in Richtung der Drehachse des Stahlstrukturrads weiter abstehen als die weiter innen liegenden Segmente.

Es hat sich gezeigt, dass mittels dieser Maßnahmen bei Stahlstrukturrädern, welche im Vergleich zu herkömmlichen Stahlrädern einen Mittelabschnitt mit erhöhter Steifigkeit aufweisen, ein besonders sicherer Schraubenfestsitz erzielt werden kann.

Durch die Nuten, welche eine Segmentierung der Anlagefläche bewirken, sind die einzelnen Segmente zueinander etwas gelenkig, so dass im Vergleich zu einer ununterbrochenen Anlagefläche ein stabileres Lastbild erhalten wird. Eine einheitliche Anlagefläche neigt aufgrund technisch nicht ganz ausschließbarer Unebenheiten zu einem Kippen der Anlagefläche auf der fahrzeugseitigen Gegenfläche, was ein Lösen der Radschrauben begünstigt. Da die radial weiter außen liegenden Segmente der Anlageflächen in Richtung der Drehachse des Stahlstrukturrads weiter abstehen, wird beim Verschrauben des Rades an einer fahrzeugseitigen Gegenfläche eine vorteilhafte aufeinander folgende Anlage der Segmente an der fahrzeugseitigen Gegenfläche erzielt. Über die vier Segmente stellt sich stets ein Lastbild in Form eines Dreibeins ein, das für den Schraubenfestsitz von Vorteil ist.

Vorteilhafte Ausgestaltungen des erfindungsgemäßen Stahlstrukturrads sind in weiteren Patentansprüchen angegeben.

Vorzugsweise verläuft eine der kreuzenden Nuten in Radialrichtung. Jedoch können die Nuten prinzipiell auch anders orientiert werden. Beispielsweise ist es möglich, dass eine Nut mit der Radialrichtung einen Winkel von +45 Grad und die andere Nut mit der Radialrichtung einen Winkel von -45 Grad einschließt.

Gemäß einer weiteren, vorteilhaften Ausgestaltung weisen die Anlageflächen jeweils eine im Wesentlichen trapezförmige Grundform auf.

Vorzugsweise sind dabei die Anlageflächen zu einer radial durch die zugehörige Befestigungsöffnung verlaufende Achse symmetrisch.

Für eine aufeinander folgende Anlage der Segmente an der fahrzeugseitigen Gegenfläche können die Anlageflächen zueinander gestuft und/oder jeweils zur Radmitte hin geneigt sein. Insbesondere können die einzelnen Segmente einer Anlagefläche jeweils zur Radmitte hin geneigt sein.

Im Hinblick auf ein ansprechendes Erscheinungsbild von Stahlstrukturrädern ist es wünschenswert, diese mit Speichenanordnungen und/oder großen Belüftungsöffnungen auszubilden, wie dies beispielsweise von Leichtmetallrädern bekannt ist. Allerdings resultiert hieraus ein steifer Mittelabschnitt, wie dies oben bereits erläutert wurde. Solche Stahlstrukturräder ähneln in Bezug auf die Steifigkeitseigenschaften eher Leichtmetallrädern als herkömmlichen Stahlrädern, weswegen hier zur Abgrenzung die Bezeichnung "Stahlstrukturrad" verwendet wird.

Gemäß einer vorteilhaften Ausgestaltung der Erfindung sind die Anlageflächen und Befestigungsöffnungen im Wurzelbereich der Speichen angeordnet, so dass der Mittelabschnitt verhältnismäßig schlank ausgebildet werden kann und ein größerer Gestaltungsspielraum für den Bereich der Speichenanordnungen und Belüftungsöffnungen zur Verfügung steht. Insbesondere können die Belüftungsöffnungen hierbei zwischen benachbarten Anlageflächen auslaufen.

Gemäß einer weiteren, vorteilhaften Ausgestaltung sind jeweils benachbarte Anlageflächen in Umfangsrichtung durch einwärts gewölbte Vertiefungen getrennt. Vorzugsweise verlaufen die Vertiefungen in Radialrichtung und weisen einen von der Radmitte weg geneigten Grund auf.

Die vorstehend erläuterte Ausgestaltung der Anlageflächen kommt bevorzugt bei Radscheiben aus Stahl zum Einsatz, welche im Bereich der Anlageflächen eine Wanddicke von mehr als 4,0 mm aufweist. Bei einem 15 Zoll- oder 16 Zoll-Stahlstrukturrad weist die Radscheibe im Bereich der Anlageflächen vorzugsweise eine Wanddicke im Bereich von 4,6 mm auf. In vorteilhafter Ausgestaltung ist die Radscheibe ist aus Stahlblech hergestellt, wobei die Platine eine Ausgangsdicke von 6,2 mm +/- 0.2 mm aufweist. Durch den im Vergleich zu Standard-Rädern höheren Umformgrad ergibt sich eine höhere Materialverfestigung, die zusätzlich steifigkeitserhöhend wirkt.

Nachfolgend wird die Erfindung anhand eines in der Zeichnung dargestellten Ausführungsbeispiels näher erläutert. Die Zeichnung zeigt in:

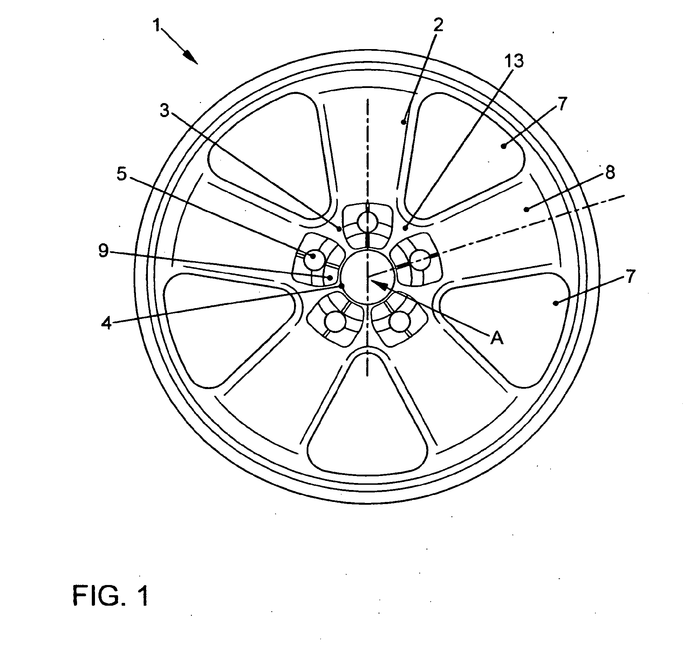

- Figur 1: eine Ansicht der Innenseite eines Stahlstrukturrads nach einem Ausführungsbeispiel der Erfindung,
- Figur 2: eine Detailansicht einer Anlagefläche im Wurzelbereich einer Speiche,
- Figur 3: einen Radialschnitt durch den in Fig. 3 dargestellten Teilbereich entlang der Linie III-III, und in
- Figur 4: eine Detailansicht entsprechend Fig. 2 für ein konventionelles Stahlrad.

Das Ausführungsbeispiel bezieht sich auf ein Stahlstrukturrad 1, das im Unterschied zu herkömmlichen Stahlrädern eine Radscheibe 2 mit einem steiferen Mittelabschnitt 3 aufweist.

Die Radscheibe 2 weist eine zentrale Mittenöffnung 4 auf. Weiterhin ist an dem Mittelabschnitt 3 ein Lochkreis mit mehreren, hier beispielhaft fünf Befestigungsöffnungen 5 vorgesehen, über die das Stahlstrukturrad 1 mittels Radschrauben oder Radmuttern am Fahrzeug montierbar ist. Die Befestigungsöffnungen 5 sind in Umfangsrichtung gleichbeabstandet angeordnet. An der vom Fahrzeug wegweisenden Außenseite kann an jeder Befestigungsöffnung 5 eine Kalotte 6 für eine Radschraube ausbildet sein.

Weiterhin weist die Radscheibe 2 mehrere Belüftungsöffnungen 7 auf, die in Umfangsrichtung durch Speichen 8 voneinander getrennt sind. Die Anzahl der Speichen 8 entspricht dabei der Anzahl der Befestigungsöffnungen 5, wobei letztere jeweils im Wurzelbereich der Speichen 8 angeordnet sind. Dies ist für den Kraftfluss im Fahrzeugrad besonders vorteilhaft. Jedoch kann auch ein anderes Radscheibendesign zum Einsatz kommen, das sich von dem Ausführungsbeispiel in Bezug auf die Form der Belüftungsöffnungen 7 sowie der Speichen 8 unterscheidet.

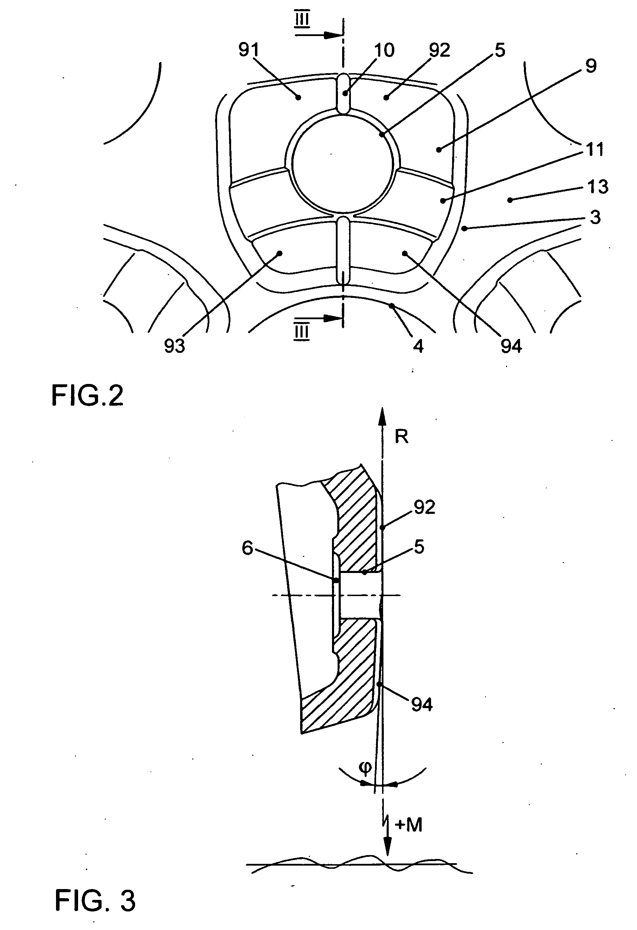

In jedem Fall weist die Radscheibe 2 an ihrer Innenseite mehrere Anlageflächen 9 auf, über die sich das Fahrzeugrad im montierten Zustand an einer planen fahrzeugseitigen Gegenfläche, beispielsweise einer Radnabe, einem Bremsscheibentopf oder einer Bremstrommel abstützt. Diese Anlageflächen 9 sind jeweils um eine Befestigungsöffnung 5 im Wurzelbereich einer Speiche 5 angeordnet und in Figur 2 näher dargestellt. Dabei sind die Anlageflächen 9 in Umfangsrichtung unverbunden bzw. durch Vertiefungen voneinander getrennt.

Jede Anlagefläche 9 wird durch zwei einander kreuzende Nuten 10 und 11 in vier Segmente 91, 92, 93 und 94 unterteilt. Während eine Nut 11 in Radialrichtung R verläuft, bildete die weitere Nut 10 ein Kreisbogensegment. Beide Nuten 10 und 11 kreuzen einander im Bereich der zugehörigen Befestigungsöffnung 5. Dabei verläuft die radiale Nut 11 durch die Mitte der Befestigungsöffnung 5, wohingegen die Mittellinie der hierzu quer verlaufenden Nut 10 gegenüber der Mitte der Befestigungsöffnung 5 etwas radial einwärts versetzt ist.

In Abwandlung des dargestellten Ausführungsbeispiels kann auch eine andere Orientierung der Nuten 10 und 11 vorgesehen sein, wobei jedoch stets eine Unterteilung der Anlagefläche 9 in vier Segmente um die Befestigungsöffnung 5 bewirkt wird. Beispielsweise können die Nuten so angeordnet werden, dass eine erste Nut mit der Radialrichtung einen Winkel von +45 einschließt, während die zweite Nut zur erstgenannten Nut um 90 Grad verdreht angeordnet ist.

Bei dem dargestellten Ausführungsbeispiel besitzen die Anlageflächen 9 jeweils eine im Wesentlichen trapezförmige Grundform. Die Mittellinie der radialen Nut 11, welche durch den Mittelpunkt der Befestigungsöffnung 5 verläuft, stellt dabei gleichzeitig eine Symmetrieachse für die Anlageflächen 9 dar. Die Symmetrie bezieht sich hier sowohl auf die Außenkontur der Anlagefläche 9 als auch auf deren räumliche Erstreckung in Richtung der Drehachse A des Stahlstrukturrads 1. Jedoch kann die Symmetrie auch allein auf die Außenkontur der Anlagefläche 9 beschränkt sein.

Wie insbesondere Figur 3 zeigt, sind die Anlageflächen 9 im gesamten jeweils um einen kleinen Winkel ϕ zur Radmitte M hin geneigt, so dass bei einer Befestigung des Stahlstrukturrads 1 an einer fahrzeugseitigen Gegenfläche zunächst die außenliegenden Segmente 91 und 92 in Anlage gegen die fahrzeugseitige Gegenfläche gelangen. Jedes der einzelnen Segmente 91 bis 94 ist dabei für sich geneigt. Die radial außenliegenden Segmente 91 und 92 stehen somit in Richtung der Drehachse an der Radscheibe weiter vor, als die radial weiter innenliegenden Segmente 93 und 94.

Die vorstehend erläuterte Radscheibe 2 ist aus Stahlblech hergestellt und mit einer Radfelge 12 verbunden. Insbesondere kann die Radscheibe 2 durch Kaltumformung aus einer Blechronde mit einer Wanddicke von mindestens 5,5 mm hergestellt werden. Es ist jedoch auch möglich, die Radscheibe zu schmieden.

Im Bereich der Anlageflächen 9 weist die Radscheibe 2, die vorzugsweise aus einer Platine mit einer Ausgangswanddicke von 6,2 mm +/- 0,2 mm hergestellt ist, eine Wanddicke von mindestens 4,6 mm auf. Im Vergleich zu einem Standard-Rad sind der Verformungsgrad und die Materialausdünnung in Bereich der Anlagefläche deutlich erhöht. Gleichzeitig tritt eine Verfestigung des Materials auf, so dass die beschriebene Steifigkeit erhalten bzw. noch gesteigert wird.

Zur weiteren Aussteifung des Mittelabschnitts 3 können zwischen den Anlageflächen 9 jeweils bezogen auf die Radinnenseite einwärts gewölbte Vertiefungen 13 ausgebildet werden. Diese vorzugsweise länglichen Vertiefungen 13 verlaufen in Radialrichtung und weisen von der Radmitte M weg geneigten Grund auf.

Das vorstehend erläuterte Stahlstrukturrad 1 gestattet aufgrund seiner hohen Steifigkeit einen großen Gestaltungsfreiraum im Hinblick auf ein optisch ansprechendes Design der Radscheibe 2. Insbesondere lassen sich Speichenanordnungen und Belüftungsöffnungen ähnlich wie bei Leichtmetallrädern realisieren. Gleichwohl wird trotz der erhöhten Steifigkeit im Bereich des Mittelabschnitts 3 eine hohe Schraubenfestsitzsicherheit erzielt.

Die Erfindung ist nicht auf das dargestellte Ausführungsbeispiel beschränkt, sondern umfasst alle durch die Patentansprüche definierten Ausgestaltungen.

## Patentansprüche

1. Stahlstrukturrad, umfassend eine Radscheibe (2) mit
- einem Mittelabschnitt (3) sowie von diesem radial abstehenden Speichen (8), welche in Umfangsrichtung durch Belüftungsöffnungen (7) voneinander getrennt sind,
- einem Lochkreis aus mehreren Befestigungsöffnungen (5) an dem Mittelabschnitt (3), sowie
- um die Befestigungsöffnungen (5) angeordneten Anlageflächen (9) zum Verspannen des Stahlstrukturrads gegen eine fahrzeugseitige Gegenfläche,
- wobei jede Anlagefläche (9) in zumindest vier Segmente (91, 92, 93, 94) unterteilt ist, und
- zumindest zwei Segmente zumindest abschnittsweise unterschiedlich weit von der Radscheibe (2) abstehen,
**dadurch gekennzeichnet, dass**
- jede Anlagefläche (9) durch einander im Bereich der Befestigungsöffnung (5) kreuzende Nuten (10, 11) in die zumindest vier Segmente (91, 92, 93, 94) unterteilt ist, und dass
- die radial weiter außen liegenden Segmente (91, 92) der Anlageflächen (9) in Richtung der Drehachse (A) des Stahlstrukturrads (1) weiter abstehen als die weiter innen liegenden Segmente (93, 94).

2. Stahlstrukturrad nach Anspruch 1, **dadurch gekennzeichnet, dass** eine der Nuten (11) in Radialrichtung verläuft.

3. Stahlstrukturrad nach Anspruch 1, **dadurch gekennzeichnet, dass** die Nuten mit der Radialrichtung einen Winkel ungleich 0 Grad einschließen.

4. Stahlstrukturrad nach einem der Ansprüche 1 bis 3, **dadurch gekennzeichnet, dass** die Anlageflächen (9) jeweils eine im wesentlichen trapezförmige Grundform aufweisen.

5. Stahlstrukturrad nach einem der Ansprüche 1 bis 4, **dadurch gekennzeichnet, dass** die Anlageflächen (9) zu einer radial durch die zugehörige Befestigungsöffnung (5) verlaufenden Achse symmetrisch sind.

6. Stahlstrukturrad nach einem der Ansprüche 1 bis 5, **dadurch gekennzeichnet, dass** die Anlageflächen (9) jeweils zur Radmitte (M) hin geneigt sind.

7. Stahlstrukturrad nach einem der Ansprüche 1 bis 6, **dadurch gekennzeichnet, dass** die einzelnen Segmente (91, 92, 93, 94) einer Anlagefläche (9) jeweils zur Radmitte (M) hin geneigt sind.

8. Stahlstrukturrad nach einem der Ansprüche 1 bis 7, **dadurch gekennzeichnet, dass** die Anlageflächen (9) und Befestigungsöffnungen (5) im Wurzelbereich der Speichen (8) angeordnet sind.

9. Stahlstrukturrad nach einem der Ansprüche 1 bis 8, **dadurch gekennzeichnet, dass** die Belüftungsöffnungen (7) zwischen benachbarten Anlageflächen (9) auslaufen.

10. Stahlstrukturrad nach einem der Ansprüche 1 bis 9, **dadurch gekennzeichnet, dass** benachbarte Anlageflächen (9) in Umfangsrichtung durch einwärts gewölbte Vertiefungen (13) getrennt sind.

11. Stahlstrukturrad nach Anspruch 10, **dadurch gekennzeichnet, dass** die Vertiefungen (13) sich in Radialrichtung erstrecken und einen von der Radmitte weg geneigten Grund aufweisen.

12. Stahlstrukturrad nach einem der Ansprüche 1 bis 11, **dadurch gekennzeichnet, dass** die Radscheibe (2) im Bereich der Anlageflächen (9) eine Wanddicke von mehr als 4,0 mm, vorzugsweise mindestens 4,6 mm aufweist.

13. Stahlstrukturrad nach einem der Ansprüche 1 bis 12, **dadurch gekennzeichnet, dass** die Radscheibe (2) im Bereich der Anlageflächen (9) eine Wanddicke im Bereich von 4,6 bis 4,8 mm aufweist.

14. Stahlstrukturrad nach einem der Ansprüche 1 bis 13, **dadurch gekennzeichnet, dass** die Radscheibe (2) aus einer Stahlblechplatine mit einer Ausgangswanddicke von 6,2 mm +/-0,2 mm gefertigt ist.

## Claims

1. Steel structure wheel, comprising a wheel disc (2) with
- a centre section (3) and spokes (8) which project radially therefrom and are separated from one another in the circumferential direction by ventilation openings (7),
- a circle of holes comprising a plurality of fastening openings (5) on the centre section (3), and
- bearing faces (9) which are arranged around the fastening openings (5) for bracing the steel structure wheel against a vehicle-side corresponding face,
- each bearing face (9) being divided into at least four segments (91, 92, 93, 94), and
- at least two segments projecting at least in sections to different extents from the wheel disc (2),
**characterized in that**
- each bearing face (9) is divided into the at least four segments (91, 92, 93, 94) by grooves (10, 11) which cross one another in the region of the fastening opening (5), and **in that**
- those segments (91, 92) of the bearing faces (9) which lie radially further to the outside project further in the direction of the rotational axis (A) of the steel structure wheel (1) than the segments (93, 94) which lie further to the inside.

2. Steel structure wheel according to Claim 1, **characterized in that** one of the grooves (11) runs in the radial direction.

3. Steel structure wheel according to Claim 1, **characterized in that** the grooves enclose an angle with the radial direction which is not equal to 0 degrees.

4. Steel structure wheel according to one of Claims 1 to 3, **characterized in that** the bearing faces (9) in each case have a substantially trapezoidal basic shape.

5. Steel structure wheel according to one of Claims 1 to 4, **characterized in that** the bearing faces (9) are symmetrical with respect to an axis which runs radially through the associated fastening opening (5).

6. Steel structure wheel according to one of Claims 1 to 5, **characterized in that** the bearing faces (9) are inclined in each case towards the wheel centre (M).

7. Steel structure wheel according to one of Claims 1 to 6, **characterized in that** the individual segments (91, 92, 93, 94) of a bearing face (9) are inclined in each case towards the wheel centre (M).

8. Steel structure wheel according to one of Claims 1 to 7, **characterized in that** the bearing faces (9) and fastening openings (5) are arranged in the root region of the spokes (8).

9. Steel structure wheel according to one of Claims 1 to 8, **characterized in that** the ventilation openings (7) run out between adjacent bearing faces (9).

10. Steel structure wheel according to one of Claims 1 to 9, **characterized in that** adjacent bearing faces (9) are separated in the circumferential direction by inwardly curved depressions (13).

11. Steel structure wheel according to Claim 10, **characterized in that** the depressions (13) extend in the radial direction and have a bottom which is inclined away from the wheel centre.

12. Steel structure wheel according to one of Claims 1 to 11, **characterized in that**, in the region of the bearing faces (9), the wheel disc (2) has a wall thickness of more than 4.0 mm, preferably at least 4.6 mm.

13. Steel structure wheel according to one of Claims 1 to 12, **characterized in that**, in the region of the bearing faces (9), the wheel disc (2) has a wall thickness in the range from 4.6 to 4.8 mm.

14. Steel structure wheel according to one of Claims 1 to 13, **characterized in that** the wheel disc (2) is manufactured from a sheet-steel plate with an initial wall thickness of 6.2 mm ± 0.2 mm.

## Revendications

1. Roue à structure en acier, comportant un disque de roue (2) comprenant
- une section centrale (3) ainsi que des rayons (8) faisant saillie radialement à partir de celle-ci, lesquels rayons sont séparés les uns des autres dans la direction périphérique par des ouvertures d'aération (7),
- un cercle des trous de boulons constitué de plusieurs ouvertures de fixation (5) sur la section centrale (3),
ainsi que
- des surfaces d'appui (9), disposées autour des ouvertures de fixation (5), pour serrer la roue à structure en acier contre une surface conjuguée située du côté du véhicule,
- chaque surface d'appui (9) étant divisée en au moins quatre segments (91, 92, 93, 94)
et
- au moins deux segments faisant saillie, au moins par sections, sur des distances différentes par rapport au disque de roue (2),
**caractérisée en ce que**
- chaque surface d'appui (9) est divisée en au moins quatre segments (91, 92, 93, 94) par des rainures (10, 11) se croisant l'une l'autre dans la région des ouvertures de fixation (5), et **en ce que**
- les segments situés radialement plus à l'extérieur (91, 92) des surface d'appui (9) font saillie plus avant en direction de l'axe de rotation (A) de la roue à structure en acier (1) que les segments situés plus à l'intérieur (93, 94).

2. Roue à structure en acier selon la revendication 1, **caractérisée en ce que** l'une des rainures (11) s'étend dans la direction radiale.

3. Roue à structure en acier selon la revendication 1, **caractérisée en ce que** les rainures forment avec la direction radiale un angle différent de 0 degré.

4. Roue à structure en acier selon l'une quelconque des revendications 1 à 3, **caractérisée en ce que** les surfaces d'appui (9) présentent respectivement une forme de base essentiellement trapézoïdale.

5. Roue à structure en acier selon l'une quelconque des revendications 1 à 4, **caractérisée en ce que** les surfaces d'appui (9) sont symétriques par rapport à un axe s'étendant radialement à travers l'ouverture de fixation associée (5).

6. Roue à structure en acier selon l'une quelconque des revendications 1 à 5, **caractérisée en ce que** les surfaces d'appui (9) sont inclinées respectivement en direction du centre de la roue (M).

7. Roue à structure en acier selon l'une quelconque des revendications 1 à 6, **caractérisée en ce que** les segments individuels (91, 92, 93, 94) d'une surface d'appui (9) sont respectivement inclinés en direction du centre de la roue (M).

8. Roue à structure en acier selon l'une quelconque des revendications 1 à 7, **caractérisée en ce que** les surfaces d'appui (9) et les ouvertures de fixation (5) sont disposées dans la région de la base des rayons (8).

9. Roue à structure en acier selon l'une quelconque des revendications 1 à 8, **caractérisée en ce que** les ouvertures d'aération (7) se terminent entre des surfaces d'appui adjacentes (9).

10. Roue à structure en acier selon l'une quelconque des revendications 1 à 9, **caractérisée en ce que** des surfaces d'appui adjacentes (9) sont séparées dans la direction périphérique par des renfoncements courbés vers l'intérieur (13).

11. Roue à structure en acier selon la revendication 10, **caractérisée en ce que** les renfoncements (13) s'étendent dans la direction radiale et présentent un fond incliné à l'écart du centre de la roue.

12. Roue à structure en acier selon l'une quelconque des revendications 1 à 11, **caractérisée en ce que** le disque de roue (2) présente, dans la région des surfaces d'appui (9), une épaisseur de paroi de plus de 4,0 mm, de préférence d'au moins 4,6 mm.

13. Roue à structure en acier selon l'une quelconque des revendications 1 à 12, **caractérisée en ce que** le disque de roue (2) présente, dans la région des surfaces d'appui (9), une épaisseur de paroi dans la plage de 4,6 à 4,8 mm.

14. Roue à structure en acier selon l'une quelconque des revendications 1 à 13, **caractérisée en ce que** le disque de roue (2) est fabriqué à partir d'une platine en tôle d'acier présentant une épaisseur de paroi initiale de 6,2 mm +/- 0,2 mm.
